# EUROPÄISCHE PATENTANMELDUNG

(11) **EP 1 013 706 A1**
(43) Veröffentlichungstag der Anmeldung: **28.06.2000**
(21) Anmeldenummer: 99811145.4
(22) Anmeldetag: 13.12.1999
(51) Int. Cl.: C08J 9/00, C08G 18/09, C08K 3/02

(54) **Reaktive Zweikomponenten-Polyurethanschäummasse und Verfahren zur Brandschutzabdichtung**

(30) Priorität: 24.12.1998 DE 19860339
(71) Anmelder: HILTI Aktiengesellschaft, 9494 Schaan (LI)
(72) Erfinder: Münzenberger, Herbert, 65191 Wiesbaden (DE); Heimpel, Franz, 86444 Affing (DE); Rump, Stefan, 86899 Landsberg (DE); Förg, Christian, 86807 Buchloe (DE)
(74) Vertreter: Wildi, Roland

(57) **Zusammenfassung**

Beschrieben werden eine reaktive Zweikomponenten-Polyurethanschäummasse für die Erzeugung von hitze- und flammbeständigen Schaumstoffen mit einer Polyolkomponente (A), die mindestens einen Polyesteralkohol, einen oder mehrere Katalysatoren für die Reaktion des Polyols mit dem Polyisocyanat, mindestens ein chemisches Treibmittel, mindestens ein physikalisches Treibmittel und roten Phosphor enthält und einer Polyisocyanatkomponente (B), die mindestens ein organisches Polylsocyanat mit einer durchschnittlichen Isocyanat-Funktionalität von mehr als 2,2 und mindestens ein physikalisches Treibmittel enthält und ein Verhältnis von Isocyanatgruppen der Polyisocyanatkomponente (B) zu OH-Gruppen der Polyolkomponente (A) 1,4 bis 3,0 zu 1 aufweist und frei ist von festen intumeszierenden Materialien, die ihr Volumen beim Erhitzen vergrößern, sowie ein Verfahren zur Brandschutzabdichtung von Durchbrüchen und/oder Durchführungen in Wänden und/oder Decken von Gebäuden unter Anwendung dieser reaktiven Zweikomponenten-Polyurethanschäummasse mit Hilfe einer Abgabeeinrichtung mit Mischkopf, in der die beiden Komponenten vermischt werden.

## Beschreibung

Die vorliegende Erfindung betrifft eine reaktive Zweikomponenten-Polyurethanschäummasse für die Erzeugung von hitze- und flammbeständigen Schaumstoffen, mit einer Polyolkomponente (A) und einer Polyisocyanatkomponente (B) und ein Verfahren zur Brandschutzabdichtung von Durchbrüchen und/oder Durchführungen in Wänden und/oder Decken von Gebäuden unter Verwendung dieser Polyurethanschäummasse.

Entsprechend den Bauordnungen der einzelnen Bundesländer gelten für öffentliche und größere Gebäude spezielle Brandschutzrichtlinien. Darin werden unter anderem Maßnahmen genannt, die dafür erforderlich sind, die Ausbreitung von eventuell auftretenden Bränden zu begrenzen. Dies geschieht beispielsweise dadurch, daß Gebäude in spezielle Brandabschnitte eingeteilt werden. Die den Brandabschnitt begrenzenden Wände und Decken der Gebäude werden entsprechend der Norm DIN 4102 vom Institut für Bautechnik und Massivbau, Braunschweig (IBMB) oder einem anderen staatlichen Institut (z.B. Material-Prüfanstalt) getestet und vom Deutschen Institut für Bautechnik, Berlin (DIBT) zugelassen. Alle Öffnungen und Durchbrüche in diesen Wänden und Decken dürfen den Brandwiderstand dieser Wände und Decken nicht negativ beeinflussen. Deshalb müssen Öffnungen (Türen, Fenster) und Durchbrüche oder Durchführungen für Rohre, Kabel oder Kabeltrassen so verschlossen werden, daß die ursprüngliche Feuerwiderstandsdauer der Wand oder der Decke nicht beeinträchtigt wird. Dieses Gesamtsystem wird von einem staatlichen Institut auf sein Verhalten im Brandfall geprüft (Bauteilprüfung). Nach erfolgreicher Prüfung wird eine bauaufsichtliche Zulassung für die getesteten Brandschutzartikel in der definierten Brandwand oder Branddecke mit detaillierter Durchführung vom DIBT erteilt.

Parallel dazu erfolgt eine Baustoffzulassung, welche das vorgeschlagene Brandschutzsystem hinsichtlich seines Eigenbrandverhaltens beschreibt. Brandschutzprodukte dürfen nur mit vorliegender Baustoffprüfung und Bauteilprüfung angeboten, verkauft und eingebaut werden.

Auf dem Markt sind bereits einige Brandschutzartikel bekannt, die nachgewiesenermaßen dazu geeignet sind, Rohr- und Kabeldurchführungen unter Bildung der genannten Brandabschnitte wirkungsvoll abzuschotten. Die Installation dieser Einrichtungen ist jedoch nicht immer einfach. Oft ist die Zugänglichkeit zu diesen Öffnungen sehr schlecht,wenn sie beispielsweise in den Ecken liegen oder nur von einer Seite, hinter einer abgehängten Decke oder unterhalb der Zimmerdecke erreichbar sind. Hier erfordert die Installation der Brandschutzartikel einen hohen Arbeitsaufwand durch Anbringen von Schalungen oder die Konfektionierung der Öffnungen oder der Artikel.

Es sind weiterhin Einkomponenten-Polyurethanschäummassen unter der Bezeichnung "Brandschutzschaum" bekannt, welche lediglich eine Baustoffprüfung, Jedoch in den wenigsten Fällen auch eine Bauteilprüfungbesitzen. Diese Materialien sind nur für sehr eingeschränkte Anwendungsbereiche geeignet, vorrangig für das Ausschäumen von schmalen und tiefen Fugen. Hier entzieht die Fugenwandung aus dem Baustoff, wie Beton, im Brandfall der Flamme so viel Wärme, daß der eingebrachte Einkomponentenschaum während einer gewissen Zeitdauer dem Feuer standhält. Bei größeren Öffnungen, namentlich bei Kabeldurchführungen oder Rohrdurchführungen, versagen diese Systeme aber vollständig.

Darüberhinaus hängen die Brandschutzeigenschaften des Schaumes sehr stark von den Umgebungsbedingungen ab. Bei niedrigen Raumluft- und Untergrundtemperaturen und damit geringer Luftfeuchtigkeit reagieren diese Einkomponenten-Polyurethanschäummassen tagelang nicht richtig aus und sacken teilweise in sich zusammen. Die sich bildenden Öffnungen und Spalten bieten dem Feuer im Brandfall den idealen Übertritt in den nächsten - vermeintlich sicher geglaubten - Brandabschnitt des Gebäudes.

Bei hohen Temperaturen hingegen wird die Härtung in der äußeren Schaumzone stark beschleunigt. Dabei wird aber der Wärme- und Wassereintrag in das Zentrum des Schaums hinein durch die Geschlossenzelligkeit des Schaums und die daraus resultierende Isolationswirkung behindert. Während also die Wärme und das Wasser nicht in das Schaumzentrum gelangen können, reagiert die Oberfläche bereits aus, so daß sich die Kapillaren schließen und kein weiterer Wärme- und Feuchtigkeitstransport mehr in das Zentrum hinein erfolgt. Der zentral gelegene Teil des Schaumes kann daher nicht mehr ausreagieren und kollabiert nach gewisser Zeit. Dieser Effekt ist aber von außen her nicht erkennbar. Der Anwender sieht eine glatte, saubere Schaumoberfläche, die beste Brandeigenschaften vortäuscht, im Brandfall aber praktisch wirkungslos ist.

Aus der DE-A-42 34 374 ist bereits ein Feuerschutzschottmaterial für Kabel und andere feuergefährdete oder brennbare Versorgungsleitungen bekannt, welches aus einem Stoffgemisch besteht, das in Form von zwei Komponenten vorliegt, welche bei Vermischen zu einem Schaumstoff reagieren, der der Familie der Polyurethane zuzuordnen und schwer entflammbar ist und ausgezeichnet auf mineralischen Untergründen und Metall haftet. Dabei wird der Polyurethanschaumkörper unter Verwendung eines Polyalkohols, namentlich eines Polyetherpolyols als Bindemittelkomponente und einer Isocyanatkomponente, namentlich eines Diisocyanats gebildet, wobei die Polyolkomponente vorzugsweise intumeszierende Zusatzstoffe enthält und die Komponenten an sich bekannte Flammschutzmittel enthalten können. Dabei kann die Schaummasse des Schottmaterials durch Verarbeitung aus Mehrkomponenten-Kartuschen oder mittels dosierend fördernder Pumpen direkt in die Bauteilöffnungen eingebracht werden. Es hat sich jedoch gezeigt, daß dieses Feuerschutzschottmaterial auf der Grundlage von Polyurethanschäumen einerseits unter Anwendung aufwendiger Kartuschen oder Dosierpumpen ausgebracht werden muß und keine ausreichende Standfestigkeit des Schaums ergibt, was namentlich den Einsatz bei schlecht zugänglichen und beispielsweise über Kopf liegenden Öffnungen erschwert oder unmöglich macht.

Gegenstand der GB-A-1 404 822 sind starre Polyisocyanuratschäume mit ausgezeichneter Verformungsbeständigkeit bei hohen Temperaturen und hoher Brandfestigkeit. Diese Polyisocyanuratschäume enthalten als wesentlichen Bestandteil intumeszierende Materialien, d.h. organische oder anorganische feste Materialien, die beim Erhitzen auf eine Temperatur von etwa 150° C ihr Volumen um mindestens etwa das dreifache vergrößern, wie Blähgraphit oder Vermiculit. Es hat sich gezeigt, daß diese intumeszierenden Materialien der angestrebten Flammbeständigkeit dann abträglich ist, wenn solche Schäume für die Brandschutzabdichtung von Durchbrüchen und/oder Durchführungen in Wänden und/oder Decken von Gebäuden vor Ort angebracht werden sollen. Die unter starkem Druck intumeszierenden Bestandteile zerstören durch ihre kraftvolle Expansion die verbindende und isolierende Kohlenstoffkruste. Diese wird abgesprengt und die Hitze der Flamme greift bisher geschützte Schaumschichten an.

Die US-A-4,452,829 beschreibt spritzfähige vernetzte Polyisocyanuratmassen, die auf eine Oberfläche aufgespritzt werden können und dort schnell aufschäumen und vernetzen unter Bildung einer starren oder flexiblen Masse, die einen hitzebeständigen flammfesten Überzug ergibt. Die spritzfähige Polyiscocyanuratmasse wird durch Vermischen und Umsetzen zweier Komponenten A und B hergestellt, von denen die eine Methylenbis(diphenylisocyanat) geringer Funktionalität und ein Polyethertriol und die andere ein Polyethertriol und gegebenenfalls ein Treibmittel, sowie einen Halogenkohlenwasserstoff, wie Chlorfluormethan, sowie einen Katalysator für die Reaktion des Polyisocyanats mit dem Polyol enthält. Diese aufspritzbare Polyisocyanuratschäummasse vermag jedoch weder im Hinblick auf ihre Brandschutzeigenschaften noch auf die Standfestigkeit bei der Anwendung zu befriedigen.

Aus der DE-C-29 30 881 ist ein Verfahren zur Herstellung von flammwidrigen, urethanmodifizierten Polyisocyanuratschaumstoffen bekannt, welche durch Umsetzen eines organischen Polyisocyanats mit einem niedermolekularen Diol in Gegenwart eines Isocyanat-Trimerisierungskatalysators gebildet werden. Die zur Ausbildung dieser Schaumstoffe verwendeten Bestandteile können zusätzlich ein Treibmittel sowie Schaumstabilisatoren sowie feuerfeste faserige Stoffe oder anorganische Füllstoffe oder auch Phosphorverbindungen oder anorganische Flammverzögerer, wie Antimonoxid, enthalten. Diese Schaumstoffe werden durch Vermischen der Bestandteile und Aufschäumen in einer Form hergestellt und können als wärmeisolierende Materialien im Bauwesen aufgrund ihrer verbesserten Flammfestigkeits- und Wärmeisoliereigenschaften eingesetzt werden. Auch diese Polyisocyanuratschaumstoffe eignen sich aufgrund ihrer geringen Anfangsfestigkeit nicht für die Brandschutzabdichtung von Durchbrüchen und/oder Durchführungen in Wänden und/oder Decken von Gebäuden vor Ort, sondern werden als vorgefertigte Bauteile eingesetzt. Die Konfektionierung solche Formteile ist aber aufwendig und ermöglicht keinen hermetischen Abschluß der unregelmäßigen Oberflächen von Mauerdurchbrüchen und Kabelbelegungen. Im übrigen wird keine ausreichende Haftung zum Untergrund erreicht.

Die der vorliegenden Erfindung zugrundeliegende Aufgabe besteht also darin, eine Polyurethanschäummasse anzugeben, welche für die Erzeugung von hitze- und flammbeständigen Schaumstoffen insbesondere bei der Brandschutzabdichtung von Durchbrüchen und/oder Durchführungen von Wänden und/oder Decken von Gebäuden eingesetzt werden kann und eine schnelle und sichere Installation mit guter Zugänglichkeit auf vielen bautypischen Untergründen gewährleistet.

Diese Aufgabe wird nun gelöst durch die reaktive Zweikompönenten-Polyurethanschäummasse gemäß Anspruch 1. Die Unteransprüche betreffen bevorzugte Ausführungsformen des Erfindungsgegenstandes sowie ein Verfahren zur Brandschutzabdichtung unter Verwendung dieser Zweikomponenten-Polyurethanschäummasse.

Gegenstand der Erfindung ist daher eine reaktive Zweikomponenten-Polyurethanschäummasse für die Erzeugung von hitze- und flammbeständigen Schaumstoffen, mit einer Polyolkomponente (A) und einer Polyisocyanatkomponente (B), dadurch gekennzeichnet, daß
die **Polyolkomponente (A)**
   **A1)** 39,5 bis 92,2 Gew.-% mindestens eines Polyesteralkohols mit einer OH-Zahl im Bereich von 130 bis 550 und einer Viskosität von 4.000 bis 10.000 mPas,
   **A2**) 0,6 bis 4,0 Gew.-% eines oder mehrerer Katalysatoren für die Reaktion des Polyols mit dem Polyisocyanat,
   **A3**) 0,2 bis 1,4 Gew.-% mindestens eines chemischen Treibmittels,
   **A4**) 6,5 bis 32,5 Gew.-% mindestens eines physikalischen Treibmittels und
   **A5**) 0,5 bis 22,6 Gew.-% roten Phosphor enthält;
die **Polyisocyanatkomponente (B)**
   **B1)** 78,9 bis 99,9 Gew.-% mindestens eines organischen Polyisocyanats mit einer durchschnittlichen Isocyanat-Funktionalität von mehr als 2,2 und
   **B2)** 0,1 bis 21,1 Gew.-% mindestens eines physikalischen Treibmittels enthält;
das Verhältnis von Isocyanatgruppen der Polyisocyanatkomponente (B) zu OH-Gruppen der Polyolkomponente (A) 1,4 bis 3,0 zu 1 beträgt; und die Schäummasse frei ist von festen intumeszierenden Materialien, die ihr Volumen beim Erhitzen vergrößern.

Ein wesentliches Merkmal der erfindungsgemäßen Polyurethanschäummasse ist, daß die beiden getrennten Komponenten, nämlich die Polyolkomponente (A) und die Polyisocyanatkomponente (B) sämtliche Bestandteile enthalten, welche im Rahmen einer exothermen Reaktion, die auch bei Untergrundtemperaturen von 5° C problemlos abläuft, einen dreidimensional vernetzten Polyurethanschaum liefert, welcher sich durch überraschend vorteilhafte Brandschutzeigenschaften auszeichnet. Durch die Anwesenheit eines physikalischen Treibmittels in beiden Komponenten wird es einerseits möglich, sämtliche Bestandteile der Polyurethanschäummasse unter dem Druck der Treibmittel aus den Druckbehältern, in denen sie vorliegen, auszutreiben, so daß lediglich eine Schlauchzuführung mit einem Austrittsventil notwendig ist, was das Ausbringen des Schaums auch in schwierig zu erreichende Öffnungen ohne weiteres ermöglicht. Andererseits bewirken diese physikalischen Treibmittel ein zusätzliches Aufschäumen des Schaums unter Entweichen der Treibmittels, was zu einer erhöhten Anfangsfestigkeit des Schaumes führt, so daß diese Schäummasse ohne weiteres auch über Kopf in größere Deckendurchbrüche eingebracht werden kann, ohne daß Abschalungen oder dergleichen erforderlich wären.

Demzufolge ist bei Anwendung der erfindungsgemäßen reaktiven Zweikomponenten-Polyurethanschäummasse auch bei einseitiger Zugänglichkeit eine Abschalung der Öffnung nicht mehr notwendig ebenso wenig wie ein Anpassen der Öffnungsgeometrie an das Brandschutzmaterial oder die Anpassung des Brandschutzmaterials an die Form der Öffnung. Eine Nachbearbeitung nach dem Aushärten durch Schneiden, Sägen oder dergleichen ist hingegen schnell und einfach möglich, so daß neugebildete Öffnungen von entfernten Kabeln oder Rohren schnell und einfach wieder verschlossen werden können.

Durch die Anwendung des ausgewählten Polyesteralkohols und des roten Phosphors in der Polyolkomponente (A) wird eine hohe Brandschutzleistung gewährleistet, die größer ist als sie mit den Materialien der DE-A-32 34 374 bzw. GB-B-1 404 822.

Ein wesentlicher Gesichtspunkt der Erfindung ist, daß die Polyurethanschäummasse frei ist von zugesetzten festen intumeszierenden Materialien, die ihr Volumen beim Erhitzen vergrößern, wie beispielsweise von Blähgraphit, Vermiculit oder ähnlichen schichtweise aufgebauten Materialien, die sich beim Erhitzen aufblähen und ihr Volumen auf das mindestens Dreifache erhöhen. Es hat sich gezeigt, daß die Anwesenheit solcher intumeszierender Materialien nachteilig ist, da die hierdurch gebildete Matrix zu starr und zu wenig fest ist, so daß die Matrix im Brandfall gesprengt wird, was einen schnellen Verlust der Isolationseigenschaften und ein schnelleres Vordringen der Depolymersationszone in den Schaumkörper hinein zur Folge hat.

Im Gegensatz dazu liefert die erfindungsgemäße Zweikomponenten-Polyurethanschäummasse einen Polyurethanschaum, der die Anforderungen der DIN-Norm 4102 Teil 5, 9, 11 und 12 im vorbeugenden baulichen Brandschutz optimal erfüllt.

Die erfindungsgemäße Zweikomponenten -Polyurethanschäummasse enthält als Polyolkomponente (A) als Polyesteralkohol (A1) vorzugsweise einen aromatischen Polyesteralkohol mit einer Hydroxylzahl von 130 bis 550, wie der im Handel erhältlichen aromatischen Polyesteralkohol Terol 196 mit einer OH-Funktionalität von 2, einem Säurewert von etwa 3 und einer OH-Zahl von etwa 178.

Als Katalysator (A2) wird vorzugsweise eine Mischung von Katalysatoren eingesetzt, welche die Reaktion des Polyols mit dem Polyisocyanat unter Bildung von Polyisocyanuratgruppen (Trimerisierungskatalysator) und gegebenenfalls von Polyurethangruppen und/oder Polyharnstoffgruppen katalysieren. Dabei ist die Anwesenheit eines Trimerisierungskatalysators zur Bildung eines einen hohen Anteil von Isocyanuratgruppen enthaltenden Polyurethanschaumes für die Erreichung hoher Brandfestigkeitswerte notwendig. Solche Katalysatoren, welche die Trimerisierung von Isocyanaten unter Bildung von Isocyanuratgruppen katalysieren, sind dem Fachmann an sich bekannt. Es handelt sich vorzugsweise um Metallsalze von organischen und/oder anorganischen Säuren, wie Alkalimetallsalze oder Erdalkalimetallsalze von Carbonsäuren, wie Natriumacetat, Kaliumacetat, Kallumadipat, Natriumbenzoat, Kaliumoctoat oder auch Zinnsalze, wie Zinnoctoat oder Bleioctoat, oder aber aliphatische und aromatische Amine, vorzugsweise tertiäre Amine, wie 2,4,6-Tris(dimethylaminomethyl)-phenol, Triethylamin, N-Ethylmorpholin, N-Methylmorpholin, Tetramethyliminobispropylamin und dergleichen. Solche Trimerisierungskatalysatoren sind beispielsweise in der britischen Patentschrift 1 404 822 und der US-Patentschrift 4,880,848 beschrieben.

Neben dem erfindungsgemäß bevorzugten Trimerisierungskatalysator kann der in der Polyolkomponente (A) eingesetzte Katalysator einen Katalysator enthalten, der mit dem Polyisocyanat unter Bildung von Polyurethangruppen und/oder Polyharnstoffgruppen reagiert. Katalysatoren dieser Art sind Amine, wie Tetramethyliminobispropylamin, Dimethylcyclohexylamin, die beispielsweise im Handel unter den Bezeichnungen Catalyst LB oder Polycat erhältlich sind.

Vorzugsweise wird eine Katalysatormischung eingesetzt, welche mindestens einen Trimerisierungskatalysator und gegebenenfalls einen oder mehrere Katalysatoren zur Bildung von Polyurethangruppen und/oder Polyharnstoffgruppen enthält.

Als Bestandteil A3) enthält die Polyolkomponente (A) der erfindungsgemäßen Polyurethanschäummasse ein chemisches Treibmittel, d.h. eine Substanz, welche mit einem oder mehreren Bestandteilen der Polyolkomponente (A) oder der Polyisocyanatkomponente (B) reagiert, inbesondere mit dem Polyisocyanat, und die bei dieser Reaktion Gase freisetzt. Ein bevorzugtes chemisches Treibmittel ist Wasser, das bei der Reaktion mit dem Polyisocyanat Kohlendioxid freisetzt, welches ein Aufschäumen des gebildeten Reaktionsproduktes verursacht.

Sowohl die Polyolkomponente (A) als auch die Polyisocyanatkomponente (B) enthalten jeweils zwingend ein physikalisches Treibmittel, d.h. eine Substanz mit einem relativ niedrigen Siedepunkt, der unterhalb 170° C, bevorzugt unterhalb 75° C, noch bevorzugter unterhalb 0° C liegt. Da die ablaufende Gesamtreaktion der Polyolkomponente (A) mit der Polyisocyanatkomponente (B) stark exotherm ist, wird bei dieser Reaktion der Siedepunkt des physikalischen Treibmittels überschritten, so daß dieses verdampft und das gesamte System aufschäumt. Erfindungsgemäß wird vorzugsweise ein physikalisches Treibmittel mit einem unterhalb 0° C liegendem Siedepunkt eingesetzt, weil es mit Hilfe dieses Treibmittels gelingt, die beiden Bestandteile der beanspruchten Polyurethanschäummasse, die vorzugsweise in getrennte Druckbehälter abgefüllt werden, aus diesen Druckbehältern auszutreiben und ein zusätzliches Aufschäumen des Materials zu bewirken, so daß ein sehr hoher Expansionsdruck des sich bildenden Schaumes erzeugt wird, welcher den Schaum bei der Anwendung in sämtliche Ritzen der zu behandelnden Öffnung preßt und sich innig an die umgebenden Materialien anpaßt. Gleichzeitig bewirkt die Anwesenheit des verdampfenden physikalischen Treibmittels eine erhöhte Standfestigkeit des sich bildenden Schaumes, so daß dieser in einfacher Weise auch in schlecht zugängliche oder über Kopf liegende Bereiche ausgebracht werden kann.

Bevorzugt werden erfindungsgemäß als physikalische Treibmittel fluorhaltige Treibmittel eingesetzt, wie 1,1,1,2-Tetrafluorethan (Treibmittel 134a) und/oder 1,1,1,2,3,3,3-Heptafluorpropan (Treibmittel 227). Erfindungsgemäß ist es auch möglich, als physikalisches Treibmittel eine Mischung ausgewählt aus fluorhaltigen Treibmitteln der oben angegebenen Art und Propan, Butan und/oder Dimethylether zu verwenden. Dabei können die in der Polyolkomponente (A) und der Polyisocyanatkomponente (B) vorhandenen physikalischen Treibmittel gleich oder auch unterschiedlich sein.

Als wesentlichen Bestandteil enthält die Polyolkomponente (A) der erfindungsgemäßen Polyurethanschäummasse als Bestandteil (A5) roten Phosphor, der vorzugsweise pulverförmig oder teilchenförmig und beschichtet bzw. mikroverkapselt (gecoatet) eingesetzt wird, beispielsweise durch Umhüllung mit einem Melaminharz.

Wie oben bereits ausgeführt, enthält die Polyolkomponente (A) der erfindungsgemäßen Polyurethanschäummasse mindestens einen Polyesteralkohol. Es hat sich Jedoch als vorteilhaft erwiesen, ein Gemisch von Polyolen mit abgestufter Reaktivität einzusetzen. Demzufolge enthält die Polyolkomponente (A) vorzugsweise als zusätzlichen Bestandteil A6) 0 bis 1,9 Gew.-% eines weiteren mit der Polyolkomponente reagierenden Kohlenwasserstoffs mit einer OH-Zahl im Bereich von 900 bis 2.000 und einer Viskosität von 1.000 bis 5.000 mPas, vorzugsweise ein aliphatisches Diol, noch bevorzugter 1,4-Butandiol und/oder Glycerol. Diese hochreaktiven Polyole mit einer OH-Zahl von 900 bis 2.000 dienen als Zünder einer größeren Gruppe von mittelstark reaktiven Polyolen, die als zusätzlicher Bestandteil A7) in einer Menge von 0 bis 4,5 Gew.-% vorhanden sein können. Es handelt sich hierbei um Polyetheralkohole mit einer OH-Zahl im Bereich von 600 bis 1.200 und einer Viskosität von 4.000 bis 10.000 mPas. Diese mittelstark reaktiven Polyole, deren Reaktion durch die hochreaktiven Polyole der erstgenannten Art A6) angestoßen wird, initiieren wiederum die Reaktion der mengenmäßig größten Gruppe der Polyesteralkohole A1) mit einer OH-Zahl im Bereich von 170 bis 550.

Durch die Anwendung einer solchen Kombination aus aromatischem Polyesteralkohol als Hauptkomponente und Diol und einem oder mehreren Polyetheralkoholen der definierten Art als Nebenkomponente, ergibt die beanspruchte Polyurethanschäummasse ein Produkt, mit noch weiter verbesserten Eigenschaften im Hinblick auf die praktische Anwendung und die erreichten Festigkeits- und Brandschutzeigenschaften.

Zur weiteren Verbesserung der Schaumeigenschaften ist es möglich, der Polyolkomponente (A) als zusätzlichen Bestandteil A8) 0 bis 1,0 Gew.-% mindestens eines Schaumstabilisators zuzusetzen, beispielsweise einen organischen Silikonschaumstabilisator, ein oberflächenaktives Siloxan und/oder ein Silan, vorzugsweise ein endständig modifiziertes Polysiloxan.

Der Schaumstabilisator bewirkt die Ausbildung vorrangig geschlossener Zellen, wodurch die Isolierwirkung des Schaumes und damit auch der Brandwiderstand erhöht werden. Es hat sich gezeigt, daß ein geschlossenzelliger Schaum halb so schnell durchbrennt wie ein vorrangig offenzelliger Polyurethanschaum. Darüberhinaus wird durch den Schaumstabilisator die mechanische Festigkeit des Zellgefüges erhöht.

Die Polyisocyanatkomponente (B) enthält als Hauptbestandteil B1) mindestens ein organisches Polyisocyanat mit einer durchschnittlichen Isocyanat-Funktionalität von mehr als 2,2, vorzugsweise von 2,25 bis 3,2 oder mehr, wobei die Isocyanat-Funktionalität als Anzahl der Isocyanatgruppen pro Molekül zu verstehen ist. Dabei ist es erfindungswesentlich, daß die in der Polyisocyanatkomponente (B) enthaltenden Polyisocyanate eine größere Anzahl von Isocyanatgruppen aufweisen als reaktive Wasserstoffatome, namentlich Hydroxylgruppen, in den Bestandteilen der Polyolkomponente (A) vorhanden sind. Diese überzähligen Isocyanatgruppen sind zur Erzeugung der Polyisocyanuratgruppen unter Einwirkung des Trimerisierungskatalysators erforderlich und liefern die angestrebte hohe Strukturfestigkeit und Brandbeständigkeit. Demzufolge beträgt das Verhältnis von Isocyanatgruppen der Polyisocyanatkomponente (B) zu OH-Gruppen der Polyolkomponente (A) (also der NCO/OH-Index) 1,4 bis 3,0 zu 1, vorzugsweise 1,55 bis 2,5 zu 1. Dieses Verhältnis kann über die Art und die Menge der Polyol-Bestandteile der Polyolkomponente (A) und die Art und die Menge des Polyisocyanats der Polyisocyanatkomponente (B) sowie das angewandte Gewichtsverhältnis von Komponente (A) zu Komponente (B) gesteuert werden, welches bei den nachfolgend beschriebenen Beispielen im allgemeinen im Bereich von 1,6 bis 2,5 zu 1 liegt.

Die erfindungsgemäß eingesetzten hochreaktiven Polyisocyanate bewirken eine gute räumliche Vernetzung mit allen eingesetzten Reaktivpartnern, nämlich den Polyolen, den Aminen und allgemein Hydroxylgruppen enthaltenden Kohlenwasserstoffe sowie die Reaktion mit sich selbst. Als organische Polyisocyanat B1) enthält die Polyisocyanatkomponente (B) vorzugsweise mindestens ein Polyarylpolyalkylenpolyisocyanat, beispielsweise ein Polymethylenpolyphenylpolyisocyanat der folgenden allgemeinen Formel 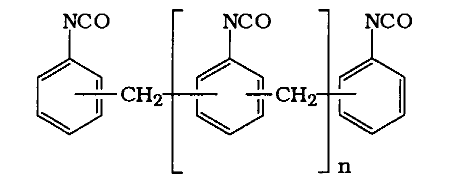 in der n eine Zahl mit einem Wert von 1 bis 2 aufweist, so daß sich eine durchschnittliche Isocyanat-Funktionalität von mindestens 2, vorzugsweise mindestens 2,5 und noch bevorzugter im Bereich von 2,25 bis 3,2 oder mehr ergibt.

Erfindungsgemäß ist es wesentlich, daß das Verhältnis von Isocyanatgruppen zu Hydroxylgruppen in den vorhandenen Bestandteilen der Polyisocyanatkomponente (B) und der Polyolkomponente (A) im Bereich von 2 bis 8 : 1 und vorzugsweise von 4 bis 7 : 1 liegt, wobei die Polyisocyanate vorzugsweise in solchen Mengen verwendet werden, daß sie 200 bis 800%, vorzugsweise 400 bis 700% der stöchiometrischen Menge der Isocyanatgruppen liefern, die für die Umsetzung sämtlicher Hydroxylgruppen, die in sämtlichen als Reagentien eingesetzten Polyolen vorhanden sind, ergeben.

Nach der Lehre der vorliegenden Erfindung müssen die Polyolkomponente (A) und Polyisocyanatkomponente (B) in der Weise vermischt werden, daß sich ein deutlicher Isocyanatüberschuß ergibt, so daß durch Reaktion des Isocyanats unter Einwirkung des Trimerisierungskatalysators eine Isocyanuratstruktur erzeugt wird. Dies wird durch die Anwendung des definierten Gewichstverhältnisses von Polyisocyanatkomponente (B) zu Polyolkomponente (A) von 1,6 bis 2,5 zu 1 hergestellt.

Als zusätzliches Polyisocyanat B 1) kann die Polyisocyanatkomponente (B) die üblicherweise für die Herstellung von Polyurethanschäumen eingesetzten Polyisocyanate enthalten, die der Formel OCN-R-NCO entsprechen, in der R für einen aliphatischen oder aromatischen, vorzugsweise aromatischen Rest steht, wie Toluoldiisocyanat, Diphenylmethandiisocyanat, Triphenyldiisocyanat, Napthyldiisocyanat, Chlorphenyl-2,4-diisocyanat, Ethylendiisocyanat, 1,4-Tetramethyldiisocyanat, p-Phenylendiisocyanat, Hexamethylendiisocyanat, 3,3-Dimethyl-4,4-biphenylendiisocyanat, 3,3-Dimethoxy-4,4-biphenylendiisocyanat und insbesondere Diphenylmethan-4,4-diisocyanat.

Auch die Polyisocyanatkomponente (B) kann als zusätzlichen Bestandteil B3) 0 bis 0,4 Gew.-% mindestens eines Schaumstabilisators enthalten. Als Schaumstabilisator können solche der oben angegebenen Art verwendet werden, wobei die Polyolkomponente (A) und die Polyisocyanatkomponente (B) gleichartige oder verschiedenartige Schaumstabilisatoren enthalten können.

Erfindungsgemäß ist es weiterhin möglich, der Polyolkomponente (A) als zusätzlichen Bestandteil A9) 0 bis 3,4 Gew.-% eines anorganischen Flammschutzmittels, wie ein Ammoniumpolyphosphat, vorzugsweise ein mit einem Melaminharz umhülltes (gecoatetes) pulverförmiges oder teilchenförmiges Ammoniumpolyphosphat zuzusetzen. Dabei ist es bevorzugt, daß die Polyolkomponente (A) den roten Phosphor A5) und das anorganische Flammschutzmittel A9) in einem Mischungsverhältnis von 60 bis 80 Gew.-% rotem Phosphor zu 40 bis 20 Gew.-% anorganischem Flammschutzmittel enthält.

Darüberhinaus ist es möglich, der Polyolkomponente (A) als zusätzlichen Bestandteil A10) 0 bis 5,0 Gew.-%, vorzugsweise 1 bis 3 Gew.-% eines anorganischen Brandschutzadditivs zuzusetzen, wie einen Krustenbildner oder Glasbildner, wie ein Phosphat, ein Borat, ein niedrig schmelzendes Silikat, ein Alkalimetall- oder Erdalkalimetall-oxid, -hydroxid oder -carbonat, ein wasserhaltiges Salz, ein Ablativ, ein hydraulisch abbindendes Erdalkalilumosilikat, Gips und/oder Melamin oder ein Melaminderivat zuzugeben.

Die Polyolkomponente (A) kann als weiteren zusätzlichen Bestandteil oder anstelle des Brandschutzadditivs A10), als zusätzlichen Bestandteil A11) 0 bis 3,4 Gew.-% eines oder mehrerer organischer Flammschutzmittel enthalten, wie einen halogenierten Kohlenwasserstoff, einen phosphorhaltigen Kohlenwasserstoff und/oder eine stickstoffhaltige Verbindung, wobei diese Bestandteile allein oder in Form von Mischungen eingesetzt werden können. Bevorzugte organische Flammschutzmittel sind Trichlorpropylphosphat, Melamin, Triethylphosphat und/oder Salze oder Ester der Phosphonsäure, wie Diethylenethylphosphonat.

Gemäß einer weiteren bevorzugten Ausführungsform der Erfindung ist es möglich, der Polyolkomponente (A) und oder der Polyisocyanatkomponente (B) als zusätzlichen Bestandteil A12) bzw. B4) 0 bis 0,9 Gew.-% gleichartiger oder verschiedener Farbstoffe zuzusetzen. Diese Farbstoffe, bei denen es sich vorzugsweise um anorganische oder organischen Pigmente und/oder organische Farbstoffe handelt, dienen dazu, dem Endverbraucher anzuzeigen, ob die beiden Bestandteile beim Ausbringen in die zu behandelnde Durchbruchöffnung in dem geeigneten Mischungsverhältnis vorliegen, weil bei Anwesenheit solcher Farbstoffe sich in Abhängigkeit von den Mischungsverhältnissen der Bestandteile unterschiedliche Verfärbungen des aufschäumenden Gemisches ergeben. Anhand einer Farbtabelle und einer geeigneten Mischeinrichtung ist es daher für den Endverbraucher möglich, das Mischungsverhältnis in Abhängigkeit von den anzustrebenden Schaumeigenschaften zu variieren und über die erzielte Mischfärbung zu überprüfen.

Einer besonders bevorzugten Ausführungsform der Erfindung gemäß liegen die Polyolkomponente (A) und die Polyisocyanatkomponente (B) in getrennten Druckbehältern vor, welche über jeweils einen flexiblen Schlauch mit einer Abgabeeinrichtung verbunden sind, welche Abgabeeinrichtung einen Mischkopf umfaßt. Vorzugsweise handelt es sich bei den Druckbehältern um Einkammer- oder Zweikammerdruckdosen aus Stahlblech oder Aluminium. Zweikammerdruckdosen sind Dosen, bei denen die entsprechende Komponente der erfindungsgemäßen Polyurethanschäummasse in einem flexiblen Beutel enthalten ist, der die eine Kammer der Zweikammerdruckdose bildet, während in der außen liegenden zweiten Kammer ein unter Druck stehendes Gas vorliegt, welches die in dem Innenbeutel vorliegenden Komponenten der Polyurethanschäummasse unter Druck aus der Zweikammerdruckdose austreibt. Dabei ist es bevorzugt, die Innenbeutel der beiden Zweikammerdruckdosen mit den Bestandteilen der Polyolkomponente (A) bzw. der Polyisocyanatkomponente (B) getrennt zu beschicken und dann mit einer 20 bis 50% der angegebenen Menge der physikalischen Treibmittel A4) bzw. B2) unter Druck zu befüllen, während der Hohlraum zwischen dem Innenbeutel und der Dosenwandung mit einem unter Druck stehenden Gas, vorzugsweise Druckluft oder Stickstoff, beaufschlagt wird.

Bei Anwendung von solchen Zweikammerdruckdosen ist es bevorzugt, die in den Innenbeutel einzubringende Menge des Treibmittels auf die Hälfte bis ein Fünftel der definierten Menge zu verringern, weil ja der übrige Auspreßdruck durch das in der Außendose vorliegende unter Druck stehende Gas geliefert wird. Weiterhin ist es möglich, den Innenbeutel vor dem Befüllen mit mechanischen Einrichtungen zu beschicken, die zum einen die Funktion von Wirbelelementen zum Aufwirbeln des Materials beim Schütteln übernehmen, andererseits den optimalen Austrag des Beutelinhaltes durch das Ventil sicherstellen.

Eine weitere Möglichkeit der Anwendung einer solchen Zweikammerdruckdose besteht darin, den Innenbeutel mit dem Katalysatorgemisch und dem chemischen Treibmittel zu beschicken und die Hauptkomponente des Materials in den umgebenden Innenbereich der Zweikammerdruckdose einzubringen und diese Bestandteile über getrennte Schläuche dem Austragsgerät zuzuführen, so daß bei Betätigen des Austragsgerätes der Hauptkomponente automatisch aus dem Innenbeutel eine definierte Menge des Katalysatorgemisches zugegeben und in dem statischen Mischer des Mundstücks der Austragseinrichtung vermischt wird.

Erfindungsgemäß ist es jedoch bevorzugt, getrennte Einkammerdruckdosen mit den Bestandteilen der Polyolkomponente (A) bzw. der Polyisocyanatkomponente (B) zu befüllen und dann mit dem physikalischen Treibmittel A4) bzw. B2) unter Druck zu setzen.

Gemäß einer weiteren bevorzugten Ausführungsform der Erfindung bringt man in die Druckbehälter zusätzlich Wirbelelemente ein, die vorzugsweise eine wesentliche höhere Dichte als das umgebende Medium aufweisen, um hierdurch ein besseres Aufwirbeln der Bestandteile beim Schütteln der Druckbehälter zu erreichen.

Gemäß einer besonders bevorzugten Ausführungsform der Erfindung besitzt die Abgabeeinrichtung die Form eines Handgriffes mit einem Quetschverschluß für die an dem Handgriff befestigten Zuführungsschläuche, die mit den Druckbehältern verbunden sind. Der Handgriff umfaßt weiterhin einen Mischkopf in Form eines Mundstücks mit einem statischen Mischer, dem die über die beiden Zuführungsschläuche getrennt zugeführten Komponenten (A) und (B) der erfindungsgemäßen Polyurethanschäummasse gleichmäßig und homogen vermischt werden. Bei dieser bevorzugten Ausführungsform der Erfindung ist es möglich, die beiden Druckbehälter mit den Komponenten der Polyurethanschäummasse beispielsweise am Gürtel des Benutzers der Einrichtung zu befestigen, so daß dieser bei der Anwendung lediglich die Abgabeeinrichtung in Form des Handgriffes mit dem Mischkopf mit einer Hand zu halten braucht und durch Betätigung des Quetschverschlusses die Öffnungen der Zuführungsschläuche freigibt, so daß die beiden Bestandteile der Polyurethanschäummasse unter der Einwirkung des in beiden Komponenten enthaltenen Treibmittels durch den Mischkopf, in dem die beiden Bestandteile innig vermischt werden, über das Mundstück aus der Abgabeeinrichtung augetrieben werden. Die aus dem Mundstück der Abgabeeinrichtung austretende Mischung, die beim Zusammengeben der Bestandteile zu reagieren beginnt, schäumt auf, wobei der Schäumvorgang durch das Verdampfen des vorhandenen physikalischen Treibmittels begünstigt wird. Aufgrund dieser chemischen und physikalischen Vorgänge ergibt sich ein schnelles Aufschäumen des in die zu behandelnden Bereiche eingebrachten Materials unter Ausbildung eines standfesten Schaumes, der sehr schnell aushärtet. In dieser Weise gelingt es ohne weiteres, Durchbrüche und/oder Durchführungen in Wänden und/oder Decken von Gebäuden mit dem gebildeten hitze- und flammbeständigen Schaumstoff auzukleiden und damit den gewünschten Brandschutz zu erreichen.

Gegenstand der Erfindung ist daher auch ein Verfahren zur Brandschutzabdichtung von Durchbrüchen und/oder Durchführungen in Wänden und/oder Decken von Gebäuden, welches darin besteht, daß man die reaktive Zweikomponenten-Polyurethanschäummasse der oben beschriebenen Art mit Hilfe der Abgabeeinrichtung mit Mischkopf, in dem die beiden Komponenten vermischt werden, in den Durchbruch und/oder die Durchführung einbringt und dort aufschäumen und aushärten läßt.

Die vorliegende Erfindung schafft somit eine reaktive Zweikomponenten-Polyurethanschäummasse, mit der hitze- und flammbeständige Schaumstoffe vor Ort erzeugt und in gegen Brand abzudichtende Hohlräume oder Durchbrüche eingebracht werden können, wodurch die Anforderungen der DIN-Norm 4102 im vorbeugenden baulichen Brandschutz erfüllt werden können. Aufgrund der erfindungsgemäßen Möglichkeit der Ausbringung des Schaums vor Ort mit einem auf Kompaktheit optimierten Austragsgerät, bei dem die Polyolkomponente (A) und die Polyisocyanatkomponente (B) in getrennten Druckbehältern vorliegen, welche am Rücken oder am Gürtel des Benutzers befestigt werden können und die über zwei Zuführungsschläuche mit der Abgabeeinrichtung in Form eines Handgriffes verbunden sind, ist die Bedienung dieses Anwendungsgerätes mit einer Hand und die Anwendung der erfindungsgemäßen Zweikomponenten-Polyurethanschäummasse in äußerst einfacher Weise möglich. Durch die Kompaktheit der Abgabeeinrichtung, welche lediglich das Handgriff mit dem Quetschverschluß und dem Mundstück umfaßt, wird die Wendigkeit des Anwenders nicht beeinträchtigt, so daß die beanspruchte Polyurethanschäummasse auch in enge Spalten in verwinkelte Rohr- und Kabelschächte eingebracht werden kann. Dies stellt einen erheblichen Vorteil dar gegenüber den herkömmlichen Feuerschutzschottmaterialien, die entweder von Hand aus sperrigen Mehrkomponenten-Kartuschen ausgepreßt oder mit Hilfe dosierend fördernder Pumpen in die zu behandelnden Hohlräume eingepreßt werden müssen.

Das erfindungswesentliche Verhältnis von Isocyanatgruppen der Polyisocyanatkomponente (B) zu OH-Gruppen der Polyolkomponente (A) (also der NCO/OH-Index) 1,4 bis 3,0 zu 1 wird durch entsprechende Anpassung von Viskosität, treibenden Gasdruck und Leitungsquerschnitt der beiden Komponenten sichergestellt. Dabei kann die Kontrolle des richtigen Mischungsverhältnisses während des Ausschäumens über die Farbe des entstehenden Schaumes erfolgen, wenn gemäß der bevorzugten Ausführungsform der Erfindung in einer oder beiden Komponenten (A) und (B) ein Farbstoff enthalten ist.

Beim Vermischen der Polyolkomponente (A) und der Polyisocyanatkomponente (B) in dem Mischkopf der Abgabeeinrichtung entsteht ein standfester Schaum, der nach dem Ausbringen in die abzudichtenden Hohlräume nochmals expandiert. Durch das Verdampfen der Lösemittel (frothing effect) wird die Standfestigkeit des Schaumes nach dem Ausbringen noch weiter erhöht. Die etwa 20 bis 60 Sekunden später einsetzende exotherme chemische Reaktion führt durch physikalische Effekte, nämlich das Verdampfen des physikalischen Treibmittels oder chemische Effekte, zum Beispiel der Reaktion des Wassers mit dem Polyisocyanat unter Bildung von CO₂ zu einer weiteren Gasbildung. Der in dieser Weise ausgebrachte standfeste Schaum läßt sich selbst in den zu behandelnden Hohlraum, beispielsweise zwischen Kabel, Kabeltrassen und Durchbruchöffnung, in Klüfte und Spalten des Mauerwerks einbringen und bewirkt einen dichten und festen Abschluß. Nach 30 bis 180 Sekunden ist der Schaum klebfrei und kann erforderlichenfalls geschnitten werden.

Die erfindungsgemäßen reaktiven Zweikomponenten-Polyurethanschäummasse zeichnet sich durch eine Reihe von Vorteilen gegenüber den herkömmlichen Polyurethanschäumen aus.

So härtet der Schaum umgebungsunabhängig aus, d.h. er ist wesentlich weniger anfällig für gering Luftfeuchtigkeit oder zu geringe Temperaturen, da sämtliche Reaktionspartner in den Komponenten (A) und (B) vollständig enthalten sind. So kann selbst bei Untergrundtemperaturen von 5° C ohne weiteres die gewünschte Reaktion unter Aufschäumen und Aushärten bewirkt werden.

Das Brandverhalten dieses Schaums unterscheidet sich signifikant von dem herkömmlicher Polyurethanschäume. Die Karbonisierungsgeschwindigkeit ist drei- bis viermal langsamer, d.h. der Schaum wiedersteht drei- bis viermal länger einer Flamme mit einer Temperatur von etwa 900° C.

Die gebildete Kohlenstoffkruste ist aufgrund der Nicht-Verwendung von festen intumeszierenden Materialien, die im Brandfall ihr Volumen beim Erhitzen erheblich vergrößern wesentlich fester als die bekannter Polyurethanschäume und kann somit weniger schnell durch mechanische Einwirkung der turbulenten Brandgase abgetragen werden.Hierdurch besitzt der Schaum im Brandfall eine wesentlich höhere Festigkeitmit einem hohen thermischen Isolationsvermögen, wodurch dem darunterliegenden Material einen verbesserten Brandschutz vermittelt wird.. Bei Anwendung von festen intumeszierenden Materialien ergibt sich eine spröde starre Matrix, die bei der Hitzeeinwirkung abblättert und abgesprengt wird, so daß sich keine thermisch isolierende verkohlte Schaumschicht bildet, welche das angestrebte Isolationsvermögen zum Schutz des darunterliegenden Materials verursacht.

Die erzeugte Schaumstruktur ist vor dem Verbrennen sehr fest mit einer Druckfestigkeit von etwa 1N/mm², im Vergleich zu herkömmlichen Bauschäumen mit einer Druckfestigkeit von lediglich 0,03 N/mm². Diese sehr feste Schaumstruktur ist im Brandfall sehr hilfreich. Wenn beispielsweise eine Kabeldurchführung mit der erfindungsgemäßen Zweikomponenten-Polyurethanschäummasse abgedichtet wird, hält der feste Schaum die im Brandfall aufgrund der hohen Wärmeleitung der Kupferleitung aufquellenden Kabelmäntel fest, so daß sich die Kabel unter Anwendung des erfindungsgemäßen Materials gegenseitig abdichten. Heiße und giftige Brandgase können dann nicht zwischen den Kabeln durch den Kabelschacht hindurchströmen.

Der erfindungsgemäß erzeugte Schaum depolymerisiert im Brandfall sehr langsam, wobei sich ein überraschend geringer Schrumpfeffekt bei der Depolymerisation ergibt, was die ergebenden Öffnungen für das Hindurchtreten von Rauchgas weitgehend verhindert.

Der unter Anwendung der erfindungsgemäßen Zweikomponenten-Polyurethanschäummasse erzeugte Schaum besitzt einen Expansionsdruck, der etwa um den Faktor 10 größer ist als der herkömmlicher Einkomponenten-Polyurethanschäume, wie sie für Bauzwecke verwendet werden. Dieser hohe Schaumdruck drückt den Schaum in alle Ritzen der zu behandelnden Öffnung hinein und preßt sich innig an die Bauteilleibung an, wodurch eine formschlüssige dichte Brandisolierung erreicht wird.

Die erfindungsgemäße Polyurethanschäummasse zeigt an allen bautypischen Untergründen eine vorzügliche Haftung.

Der unter Anwendung der erfindungsgemäßen Polyurethanschäummasse erzeugte Brandschutzschaum zeigt selbst unter extremen klimatischen Bedingungen keinen meßbaren Schrumpf in einer 20 mm Holzfuge. Herkömmliche Bauschäume ziehen sich in einer 20 mm Holzfuge um bis zu 4 mm zusammen, was in starren Fugen zu Rißbildung im Schaum oder an der Bauteillaibung führt. Derartige Risse lassen das Bauteil im Brandtest innerhalb von 30 Minuten versagen, indem es durchbrennt.

Im Gegensatz zu herkömmlichen Polyurethanschäumen zeigt der aus der erfindungsgemäßen Zweikomponenten-Polyurethanschäummasse erzeugte Schaum kein Abtropfen oder Abfließen des Schaumes bei Erhitzen auf eine Temperatur im Bereich von 250 bis 450° C, so daß die mit diesem Schaum verschlossene Öffnung verschlossen bleibt. Auch im Fall von Schwelbränden vermittelt die erfindungsgemäße Polyurethanschäummasse einen hervorragenden Brandschutzeffekt.

Das folgende Beispiel dient der weiteren Erläuterung der Erfindung.

In den folgenden Tabellen 1 und 2 sind die Bestandteile der Polyolkomponente (A) bzw. der Polyisocyanatkomponente (B) angegeben.

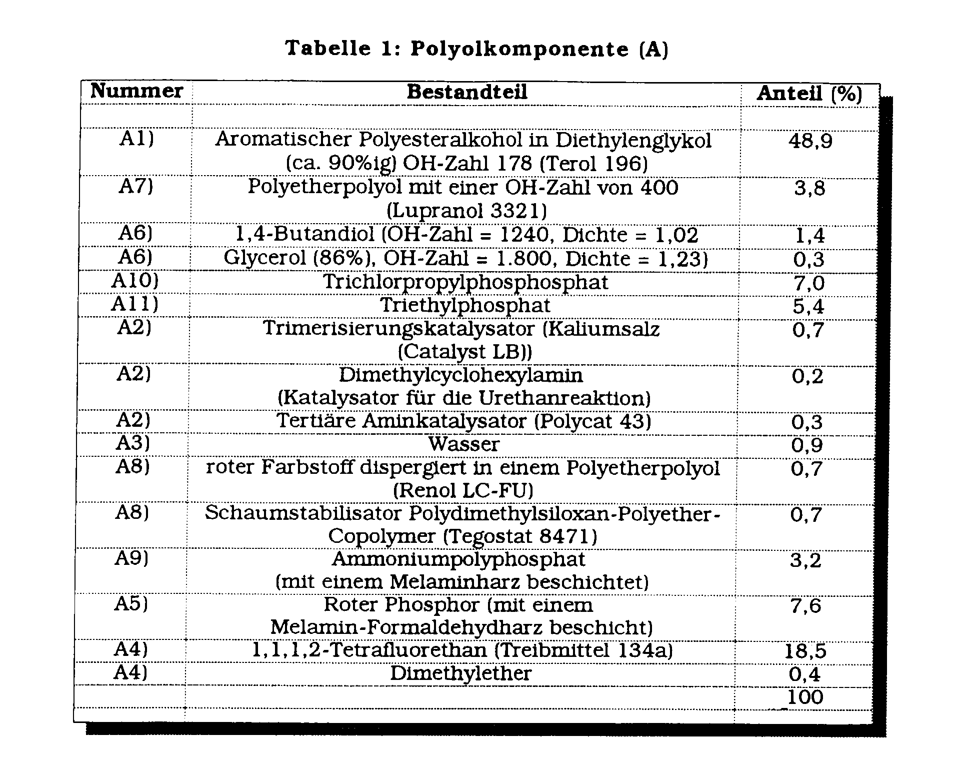

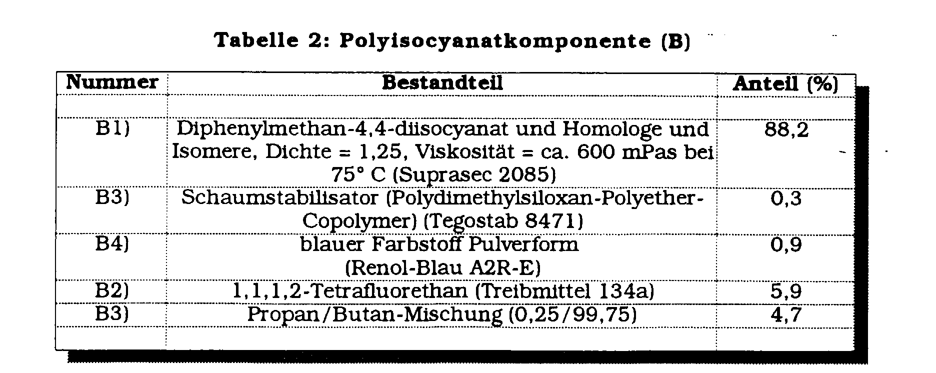

Die oben angegebenen Bestandteile werden vermischt und in getrennte Dosen A bzw. B eingebracht, wobei die Treibgasmischung aus Treibmittel 134a und dem Dimethylether bzw. der Propan/Butan-Mischung jeweils zum Schluß unter Druck aufgepreßt wird.

Die Druckbehälter werden mit Hilfe von zwei Zuführungsschläuchen mit einer Abgabeeinrichtung in Form eines Handgriffes mit einem Mundstück verbunden, wobei das Mundstück einen Mischkopf mit einem statischen Mischer enthält. Beim Betätigen des in dem Handgriff vorhandenen Quetschventils werden die beiden Schläuche geöffnet, so daß die Jeweiligen Komponenten A bzw. B unter der Einwirkung des Innendrucks des Treibmittels durch die Schläuche in den Mischkopf der Abgabeeinrichtung und den darin vorhandenen Mischer gepreßt werden und aus dem Mundstück unter Aufschäumen austreten. In dieser Weise können wegen der starken Expansionskraft der Polyurethanschäummasse auch größere Durchbrüche und Durchführungen durch Wände und/oder Decken abgedichtet werden, wobei nach der Aushärtung des Materials auch bei ungünstigen Witterungsbedingungen also tiefen Temperaturen und geringer Luftfeuchtigkeit eine hohe Festigkeit des Brandschutzschaumes erreicht wird.

### Vergleichsbeispiel

Zur Verdeutlichung der besseren Brandschutzeigenschaften des mit Hilfe der erfindungsgemäßen reaktiven Zweikomponenten-Polyurethanschäummasse wurden Schäume gemäß der DE-A-42 34 3 74 und der GB-B-14 04 822 hergestellt und in Öffnungen mit einem Durchmesser von 110 mm in 100 mm starkem Porenbeton eingebracht. Nach einer Beflammung während 30 Minuten bei 900° C ergaben sich die in der nachfolgenden Tabelle 3 angegebenen Eigenschaften:

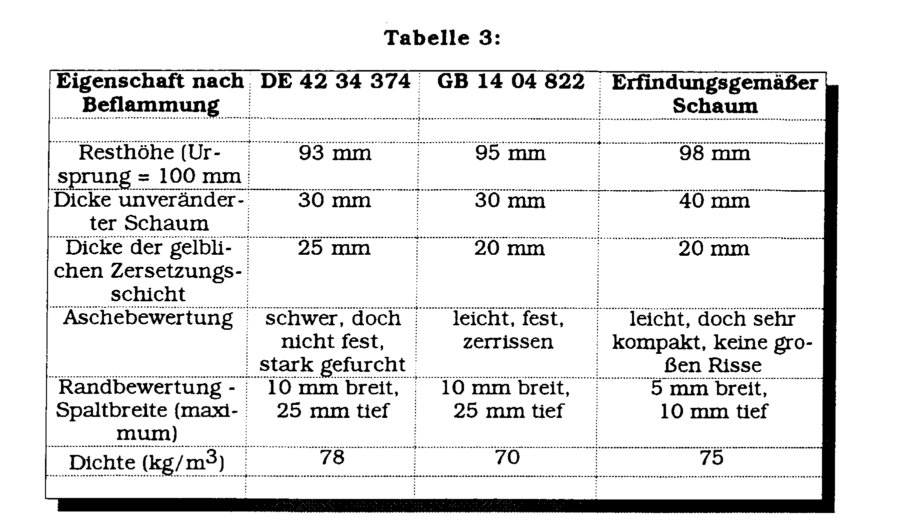

Aus der obigen Tabelle ist ersichtlich, daß der aus der erfindungsgemäßen reaktiven Zweikomponenten-Polyurethanschäummasse hergestellte Schaum ein deutlich besseres Brandverhalten zeigt als die Produkte des Standes der Technik, wobei die angegebenen Eigenschaften erkennen lassen, daß mit der erfindungsgemäßen Polyurethanschäummasse eine wesentlich bessere Brandfestigkeit erreicht werden kann.

## Patentansprüche

1. Reaktive Zweikomponenten-Polyurethanschäummasse für die Erzeugung von hitze- und flammbeständigen Schaumstoffen, mit einer Polyolkomponente (A) und einer Polyisocyanatkomponente (B), **dadurch gekennzeichnet**, daß
die **Polyolkomponente (A)**
**A1)** 39,5 bis 92,2 Gew.-% mindestens eines Polyesteralkohols mit einer OH-Zahl im Bereich von 130 bis 550 und einer Viskosität von 4.000 bis 10.000 mPas,
**A2)** 0,6 bis 4,0 Gew.-% eines oder mehrerer Katalysatoren für die Reaktion des Polyols mit dem Polyisocyanat,
**A3)** 0,2 bis 1,4 Gew.-% mindestens eines chemischen Treibmittels,
**A4)** 6,5 bis 32,5 Gew.-% mindestens eines physikalischen Treibmittels und
**A5)** 0,5 bis 22,6 Gew.-% roten Phosphor enthält;
die **Polyisocyanatkomponente (B)**
**B1)** 78,9 bis 99,9 Gew.-% mindestens eines organischen Polyisocyanats mit einer durchschnittlichen Isocyanat-Funktionalität von mehr als 2,2 und
**B2)** 0,1 bis 21,1 Gew.-% mindestens eines physikalischen Treibmittels enthält;
das Verhältnis von Isocyanatgruppen der Polyisocyanatkomponente (B) zu OH-Gruppen der Polyolkomponente (A) 1,4 bis 3,0 zu 1 beträgt; und die Schäummasse frei ist von festen intumeszierenden Materialien, die ihr Volumen beim Erhitzen vergrößern.

2. Zweikomponenten-Polyurethanschäummasse nach Anspruch 1, dadurch gekennzeichnet, daß die **Polyolkomponente (A)** als Polyesteralkohol **A1)** einen aromatischen Polyesteralkohol enthält.

3. Zweikomponenten-Polyurethanschäummassenach mindestens einem der Ansprüche 1 oder 2, dadurch gekennzeichnet, daß die **Polyolkomponente (A)** als Katalysator **A2)** eine Mischung von Katalysatoren enthält, welche die Reaktion des Polyols mit dem Polyisocyanat unter Bildung von Polyisocyanuratgruppen (Trimerisierungskatalysator) und gegebenenfalls von Polyurethangruppen und/oder Polyharnstoffgruppen katalysieren.

4. Zweikomponenten-Polyurethanschäummasse nach Anspruch 3, dadurch gekennzeichnet, daß die **Polyolkomponente (A)** als Katalysator **A2)** eine Mischung von Zinnsalzen organischer Säuren, Alkali- und/oder Erdalkalisalzen organischer und/oder anorganischer Säuren, Bleisalzen organischer Säuren und/oder aliphatische und/oder aromatische Amine enthält.

5. Zweikomponenten-Polyurethanschäummasse nach Anspruch 3, dadurch gekennzeichnet, daß die **Polyolkomponente (A)** in der Katalysatormischung **A2)** als Trimerisierungskatalysator eine starke Base, ein Alkalimetallcarboxylat und/oder ein tertiäres Amin enthält.

6. Zweikomponenten-Polyurethanschäummasse nach den Ansprüche 3 bis 5, dadurch gekennzeichnet, daß die **Polyolkomponente (A)** als Katalysatormischung **A2)** eine Mischung aus Dimethylcyclohexylamin und/oder einem disubstituierten Amin, wie Tetramethyliminobispropylamin enthält.

7. Zweikomponenten-Polyurethanschäummasse nach mindestens einem der Ansprüche 1 bis 6, dadurch gekennzeichnet, daß die **Polyolkomponente (A)** als chemisches Treibmittel **A3)** Wasser enthält.

8. Zweikomponenten-Polyurethanschäummasse nach mindestens einem der Ansprüche 1 bis 7, dadurch gekennzeichnet, daß die Polyolkomponente (A) und die **Polyisocyanatkomponente (B)** als physikalische Treibmittel **A4)** bzw. **B2)** gleichartige oder verschiedene Treibmittel oder Treibmittelgemische enthalten.

9. Zweikomponenten-Polyurethanschäummasse nach Anspruch 8, dadurch gekennzeichnet, daß das physikalische Treibmittel **A4)** bzw. **B2)** ein Treibmittel mit einem Siedepunkt bei Normalbedingungen von ≤ 170°C, bevorzugter von ≤75°C und noch bevorzugter von ≤0°C ist.

10. Zweikomponenten-Polyurethanschäummasse nach mindestens einem der Ansprüche 8 bis 9, dadurch gekennzeichnet, daß die physikalischen Treibmittel **A4)** bzw. **B2)** mindestens ein fluorhaltiges Treibmittel umfassen.

11. Zweikomponenten-Polyurethanschäummasse nach Anspruch 10, dadurch gekennzeichnet, daß als fluorhaltiges Treibmittel **A4)** bzw. **B2)** 1,1,1,2-Tetrafluorethan (Treibmittel 134a) und/oder 1,1,1,2,3,3,3-Heptafluorpropan (Treibmittel 227) enthalten ist.

12. Zweikomponenten-Polyurethanschäummasse nach einem der Ansprüche 8 bis 11, dadurch gekennzeichnet, daß als physikalisches Treibmittel **A4)** bzw. **B2)** eine Mischung ausgewählt aus fluorhaltigen Treibmitteln, Propan, Butan und/oder Dimethylether enthalten ist.

13. Zweikomponenten-Polyurethanschäummasse nach mindestens einem der Ansprüche 1 bis 17, dadurch gekennzeichnet, daß die **Polyolkomponente (A)** als Bestandteil **A5)** beschichteten bzw. mikroverkapselten roten Phosphor enthält.

14. Zweikomponenten-Polyurethanschäummasse nach mindestens einem der Ansprüche 1 bis 13, dadurch gekennzeichnet, daß die **Polyolkomponente (A)** als zusätzlichen Bestandteil **A6)** 0 bis 1,9 Gew.-% eines weiteren mit der Polyolkomponente reagierenden Kohlenwasserstoffs mit einer OH-Zahl im Bereich von 900 bis 2.000 und einer Viskosität von 1.000 bis 5.000 mPas enthält.

15. Zweikomponenten-Polyurethanschäummasse nach Anspruch 14, dadurch gekennzeichnet, daß die **Polyolkomponente (A)** als weiteren mit der Polyolkomponente reagierenden Kohlenwasserstoff **A6)** ein aliphatisches Diol enthält.

16. Zweikomponenten-Polyurethanschäummasse nach Anspruch 15, dadurch gekennzeichnet, daß die **Polyolkomponente (A)** als aliphatisches Diol **A6)** 1,4-Butandiol und/oder Glycerol enthält.

17. Zweikomponenten-Polyurethanschäummasse nach mindestens einem der Ansprüche 1 bis 16, dadurch gekennzeichnet, daß die **Polyolkomponente (A)** als zusätzlichen Bestandteil **A7)** 0 bis 4,5 Gew.-% eines Polyetheralkohols mit einer OH-Zahl im Bereich von 600 bis 1.200 und einer Viskosität von 4.000 bis 10.000 mPas enthält.

18. Zweikomponenten-Polyurethanschäummasse nach Anspruch 17, dadurch gekennzeichnet, daß die **Polyolkomponente (A)** als Polyetheralkohol **A7)** einen aromatischen Polyetheralkohol enthält.

19. Zweikomponenten-Polyurethanschäummasse nach mindestens einem der Ansprüche 1 bis 18, dadurch gekennzeichnet, daß die **Polyolkomponente (A)** als zusätzlichen Bestandteil **A8**) 0 bis 1,0 Gew.-% mindestens eines Schaumstabilisators enthält.

20. Zweikomponenten-Polyurethanschäummasse nach mindestens einem der Ansprüche 1 bis 19, dadurch gekennzeichnet, daß die **Polyisocyanatkomponente (B)** als organisches Polyisocyanat **B1)** mindestens ein Polyarylpoalyakylenpolyisocyananat mit einer durchschnittlichen Isocyanat-Funktionalität von 2,25 bis 3,2 oder mehr, vorzugsweisePolymethylen-polyphenyl-polyisocyanat und/oder Diphenylmethan-4,4'-diisocyanat enthält.

21. Zweikomponenten-Polyurethanschäummasse nach mindestens einem der Ansprüche 1 bis 20, dadurch gekennzeichnet, daß die **Polyisocyanatkomponente (B)** als zusätzlichen Bestandteil **B3)** 0 bis 0,4 Gew.-% mindestens eines Schaumstabilisators enthält.

22. Zweikomponenten-Polyurethanschäummasse nach Anspruch 21, dadurch gekennzeichnet, daß die **Polyolkomponente (A)** und die **Polyisocyanatkomponente (B)** gleichartige oder verschiedene organische Schaumstabilisatoren enthalten.

23. Zweikomponenten-Polyurethanschäummasse nach Anspruch 22, dadurch gekennzeichnet, daß die **Polyolkomponente (A)** bzw. die **Polyisocyanatkomponente (B)** als organischen Silikonschaumstabilisator ein oberflächenaktives Siloxan und/oder ein Silan, vorzugsweise ein endständig modifiziertes Polysiloxan enthalten.

24. Zweikomponenten-Polyurethanschäummasse nach mindestens einem der Ansprüche 1 bis 23, dadurch gekennzeichnet, daß die **Polyolkomponente (A)** den roten Phosphor **A5)** in mit einem Melaminharz umhüllter Form enthält.

25. Zweikomponenten-Polyurethanschäummasse nach mindestens einem der Ansprüche 1 bis 24, dadurch gekennzeichnet, daß die **Polyolkomponente (A)** als zusätzlichen Bestandteil **A9)** 0 bis 3,4 Gew.-% eines anorganischen Flammschutzmittels enthält.

26. Zweikomponenten-Polyurethanschäummasse nach Anspruch 25, dadurch gekennzeichnet, daß die **Polyolkomponente (A)** als anorganisches Flammschutzmittel A9) ein vorzugsweise mit einem Melaminharz umhülltes Ammoniumpolyphosphat enthält.

27. Zweikomponenten-Polyurethanschäummasse nach den Ansprüchen 25 und 26, dadurch gekennzeichnet, daß die **Polyolkomponente (A)** den roten Phosphor **A5)** und das anorganische Flammschutzmittel **A9)** in einem Mischungsverhältnis von 60 bis 80 Gew.-% rotem Phosphor und 40 bis 20 Gew.-% anorganischem Flammschutzmittel enthält.

28. Zweikomponenten-Polyurethanschäummasse nach mindestens einem der Ansprüche 1 bis 27, dadurch gekennzeichnet, daß die **Polyolkomponente (A)** als zusätzlichen Bestandteil **A10)** 0 bis 5,0 Gew.-% eines anorganischen Brandschutzadditivs enthält.

29. Zweikomponenten-Polyurethanschäummasse nach Anspruch 28, dadurch gekennzeichnet, daß die **Polyolkomponente (A)** als anorganisches Brandschutzadditiv **A10)** einen Krustenbildner oder Glasbildner, wie ein Phosphat, ein Borat, ein niedrig schmelzendes Silikat, ein Alkalimetall- oder Erdalkalimetall-oxid,-hydroxid oder -carbonat, ein wasserhaltiges Salz, ein Ablativ, ein hydraulisch abbindendes Erdalkalilumosilikat, Gips und/oder Melamin oder ein Melaminderivat enthält.

30. Zweikomponenten-Polyurethanschäummasse nach mindestens einem der Ansprüche 1 bis 29, dadurch gekennzeichnet, daß die **Polyolkomponente (A)** als zusätzlichen Bestandteil **A11**) 0 bis 3,4 Gew.-% eines oder mehrerer organischer Flammschutzmittel enthält.

31. Zweikomponenten-Polyurethanschäummasse nach Anspruch 30, dadurch gekennzeichnet, daß die **Polyolkomponente (A)** ein organisches Flammschutzmittel ausgewählt aus halogenierten Kohlenwasserstoffen, phosphorhaltigen Kohlenwasserstoffen und/oder stickstoffhaltigen Verbindungen einzeln oder in Form einer Mischung enthält.

32. Zweikomponenten-Polyurethanschäummasse nach den Ansprüchen 30 und 31, dadurch gekennzeichnet, daß die **Polyolkomponente (A)** als organisches Flammschutzmittel A11) Trichlorpropylphosphat, Melamin, Triethylphosphat und/oder Salze oder Ester der Phosphonsäure, wie Diethylenethylphosphonat enthält.

33. Zweikomponenten-Polyurethanschäummasse nach mindestens einem der Ansprüche 1 bis 32, dadurch gekennzeichnet, daß die **Polyolkomponente (A)** und/oder die **Polyisocyanatkomponente (B)** als zusätzlichen Bestandteil **A12)** bzw. **B4)** 0 bis 0,9 Gew.-% gleichartige oder verschieden Farbstoffe enthalten.

34. Zweikomponenten-Polyurethanschäummasse nach Anspruch 33, dadurch gekennzeichnet, daß als Farbstoff ein anorganisches oder organisches Pigment und/oder ein organischer Farbstoff enthalten ist.

35. Zweikomponenten-Polyurethanschäummasse nach mindestens einem der Ansprüche 1 bis 34, dadurch gekennzeichnet, daß die **Polyolkomponente (A)** und die **Polyisocyanatkomponente (B)** in getrennten Druckbehältern vorliegen, welche über jeweils einen flexiblen Schlauch mit einer Abgabeeinrichtung mit einem Mischkopf verbunden sind.

36. Zweikomponenten-Polyurethanschäummasse nach Anspruch 35, dadurch gekennzeichnet, daß die Druckbehälter Einkammer- oder Zweikammerdruckdosen aus Stahlblech oder Aluminium sind.

37. Zweikomponenten-Polyurethanschäummasse nach Anspruch 36, dadurch gekennzeichnet, daß die Einkammerdruckdosen mit den Bestandteilen der **Polyolkomponente (A)** bzw. der **Polyisocyanatkomponente (B)** beschickt und dann mit den physikalischen Treibmitteln **A4)** bzw. **B2)** unter Druck befüllt worden sind.

38. Zweikomponenten-Polyurethanschäummasse nach Anspruch 37, dadurch gekennzeichnet, daß die Innenbeutel der Zweikammerdruckdosen mit den Bestandteilen der **Polyolkomponente (A)** bzw. der **Polyisocyanatkomponente (B)** beschickt und dann mit einer 20% bis 50% der angegebenen Menge der physikalischen Treibmitteln **A4)** bzw. **B2)** unter Druck befüllt worden und der Hohlraum zwischen Innenbeutel und Dosenwandung mit einem unter Druck stehenden Gas beaufschlagt worden ist.

39. Zweikomponenten-Polyurethanschäummasse nach mindestens einem der Ansprüche 34 bis 37, dadurch gekennzeichnet, daß die Druckbehälter zusätzlich Wirbelelemente, die vorzugsweise eine wesentlich höheren Dichte als das umgebende Medium aufweisen, zum Aufwirbeln der Bestandteile enthalten.

40. Zweikomponenten-Polyurethanschäummasse nach mindestens einem der Ansprüche 35 bis 39, dadurch gekennzeichnet, daß die Abgabeeinrichtung die Form eines Handgriffs mit einem Quetschverschluß für die an dem Handgriff befestigten Zuführungsschläuche besitzt und einen Mischkopf in Form eines Mundstücks mit einen statischen Mischer aufweist.

41. Verfahren zur Brandschutzabdichtung von Durchbrüchen und/oder Durchführungen in Wänden und/oder Decken von Gebäuden, **dadurch gekennzeichnet**, daß man die reaktive Zweikomponenten-Polyurethanschäummasse nach mindestens einem der vorhergehenden Ansprüche mit Hilfe der Abgabeeinrichtung mit Mischkopf, in dem die beiden Komponenten vermischt werden, in den Durchbruch und/oder die Durchführung einbringt und aufschäumen und aushärten läßt.
